(19) **Europäisches Patentamt / European Patent Office / Office européen des brevets**

(11) **EP 1 752 504 B1**

(12) **EUROPEAN PATENT SPECIFICATION**

(45) Date of publication and mention
of the grant of the patent:
**16.07.2008 Bulletin 2008/29**

(51) Int Cl.:
***C09D 11/00*** *(2006.01)*

(21) Application number: **06016837.4**

(22) Date of filing: **11.08.2006**

(54) **Ink composition**

Tintenzusammensetzung

Composition d'encres

(84) Designated Contracting States:
**DE FR GB**

(30) Priority: **12.08.2005 JP 2005234053**

(43) Date of publication of application:
**14.02.2007 Bulletin 2007/07**

(73) Proprietor: **Seiko Epson Corporation**
**Shinjuku-ku**
**Tokyo (JP)**

(72) Inventors:
• **Oyanagi, Takashi**
**Suwa-shi**
**Nagano-ken 392-8502 (JP)**

• **Nakano, Keitaro**
**Suwa-shi**
**Nagano-ken 392-8502 (JP)**

(74) Representative: **Grünecker, Kinkeldey,**
**Stockmair & Schwanhäusser**
**Anwaltssozietät**
**Leopoldstrasse 4**
**80802 München (DE)**

(56) References cited:
**EP-A2- 1 674 537      GB-A- 2 351 292**
**US-A- 4 246 154        US-A- 4 358 476**
**US-A- 5 623 001**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The present invention relates to an ink composition, and particularly to an ink composition which is curable by ultraviolet light.

BACKGROUND OF THE INVENTION

An ink jet recording method is a printing method in which droplets of an ink composition are allowed to fly and deposited on a recording medium such as paper to perform printing. This ink jet recording method is characterized by that images having high resolution and high quality can be printed at high speed. The ink composition used in the ink jet recording method is generally one mainly comprising an aqueous solvent and containing a coloring material component and a wetting agent such as glycerin for the purpose of preventing clogging.

When printing is performed on a recording medium such as paper or cloth of a type to which the aqueous ink composition is hard to be used, or a plate or a film made of a material such as metal, plastics or glass into which the aqueous ink composition does not penetrate, for example, a resin such as a phenol, melamine, vinyl chloride, acrylic, polycarbonate or PET resin, the ink composition is required to contain a component which can allow the coloring material to be stably fixed to the recording medium. In particular, when printing is performed on a printed-circuit board, a color filter or the like, quick drying properties and solvent resistance are demanded for the ink composition.

To such a demand, an ink composition comprising a component polymerizable by ultraviolet irradiation has hitherto been proposed (for example, see patent document 1). Further, an ultraviolet curing type ink composition comprising a coloring material, an ultraviolet curing agent, a photopolymerization initiator and the like has been proposed (for example, see patent document 2). It is disclosed that according to these ink compositions and ink jet recording methods, blurring of the ink composition on the recording medium can be prevented to improve image quality.

In the ink jet recording method using the ink composition comprising the component polymerizable by ultraviolet irradiation as described above, ultraviolet light is irradiated after the ink composition has been deposited on the recording medium. Thereupon, the photopolymerization initiator in the ink composition forms radicals, thereby initiating polymerization of an oligomer and a monomer to cause curing. Accordingly, the coloring material in the ink composition is firmly fixed onto the recording medium. It is considered that this firm fixing enables to realize printing which is high in film strength, solvent resistance and color density and has decreased blurring and unevenness.

However, in the ultraviolet curing type ink composition comprising a coloring material, an ultraviolet curing agent, a photopolymerization initiator and the like as described above, the polymerizable compound is often selected attaching importance to curability. On the other hand, the ultraviolet curing type ink composition has high viscosity, lacks storage stability, and contains a toxic substance in many cases.

Because of the ultraviolet curing type ink composition having high viscosity, an additional device such as a heating device becomes necessary in recording using an ink jet printer. This has been unfavorable.

Further, because of the ultraviolet curing type ink composition lacking storage stability, it is essential that the ink is stored in a refrigerate state, or the life of the ink is short, which has been inconvenient.

Still further, because of the ultraviolet curing type ink composition containing a toxic substance, a protective equipment is indispensable at the time of use, and there has been a restriction on its use.

Then, in order to solve the above-mentioned problems, there is disclosed a technique in which a decrease in viscosity, safety and the like are realized by adding an organic solvent or water to an ultraviolet curing type ink composition (for example, patent documents 3 and 4).

However, the technique disclosed in patent documents 3 and 4 can realize a decrease in viscosity, but the organic solvent or water unnecessary for curing oozes out to cause bleed, or volatile matter of the organic solvent is generated to have an adverse effect on the environment. This has therefore been unsatisfactory.

Patent Document 1: JP-A-3-216379
Patent Document 2: U.S. Patent 5,623,001
Patent Document 3: JP-A-2003-301130
Patent Document 4: JP-A-2004-18716

SUMMARY OF THE INVENTION

Accordingly, an object of the invention is to solve the above-mentioned problems, and to provide an ultraviolet curing type ink composition which realizes a decrease in viscosity and is excellent in storage stability, curability and safety.

The present inventors have conducted extensive studies, and as a result, have found that a decrease in viscosity can be realized and storage stability, curability and safety can be improved by using allyl glycol and N-vinylformamide, thus completing the invention.

That is, the invention is achieved by the following constitutions:

(1) An ink composition comprising at least, as polymerizable compounds, allyl glycol and at least one of a bifunctional monomer and a multifunctional monomer, the ink composition further comprising N-vinylformamide as a polymerizable compound, and satisfying the following expressions:

$$20 \leq X \leq 70$$

$$0 < Y \leq 35$$

wherein Y represents the content of N-vinylformamide in the ink composition, and wherein X represents the content of allyl glycol in the ink composition.

(2) The ink composition according to item (1) above, wherein Y satisfies the following expression: $0 < Y \leq 25$.

(3) An ink composition set comprising:

  ink composition A containing at least a polymerizable compound and a photopolymerization initiator; and
  ink composition B containing at least a polymerizable compound and a coloring material,

wherein the ink composition B comprises at least, as the polymerizable compounds, allyl glycol and at least one of a bifunctional monomer and a multifunctional monomer,
wherein the ink composition B further comprises N-vinylformamide as the polymerizable compound, and satisfies the following expressions:

$$20 \leq X \leq 70$$

$$0 < Y \leq 35$$

wherein Y represents the content of N-vinylformamide in the ink composition, and wherein X represents the content of allyl glycol in the ink composition.

(4) The ink composition set according to item (3) above, wherein Y satisfies the following expression:

$$0 < Y \leq 25.$$

DETAILED DESCRIPTION OF THE INVENTION

Allyl glycol used as a polymerizable compound in the invention is a glycol ether having an allyl group ($CH_2=CH-CH_2-$). The allyl group has a carbon-carbon double bond, but is generally not radically polymerized by itself. According to the invention, however, it has been confirmed that even allyl glycol which is not radically polymerized by itself becomes copolymerizable by allowing other polymerizable compounds, particularly a bifunctional monomer and/or a multifunctional monomer, to coexist in the ink, whereby radical polymerization proceeds. Further, when the amount of allyl glycol added is less than 10%, the ratio of the bifunctional monomer and/or the multifunctional monomer in the ink increases to cause the viscosity of the ink to exceed the viscosity at which the ink is ejectable from an ink jet printer. Furthermore, when the amount of allyl glycol added is more than 80%, the ink becomes difficult to be cured even though the bifunctional monomer and/or the multifunctional monomer are added, because the ratio of allyl glycol excessively increases. Accordingly, in the invention, allyl glycol is used as an essential component within the range of 20% to 70%.

Further, N-vinylformamide used as a polymerizable compound in the invention is a kind of N-vinyl compound, and has a carbon-carbon double bond in a vinyl group moiety thereof. By mixing N-vinylformamide, a low viscosity similar to that at the time when allyl glycol is added can be secured, and further, curability can be improved. Furthermore, by suppressing the amount of N-vinylformamide added, which has an oral acute toxicity value to a rat of about 1400 mg/kg, to 25% or less, it becomes unnecessary to attach a toxic substance indication to a package of an ink cartridge, resulting in easy distribution as a commercial product for general users, and in higher safety for the human body.

Moreover, the bifunctional monomer and/or the multifunctional monomer used as a polymerizable compound in the invention are one which is polymerizable by radicals formed from a photopolymerization initiator. Besides, one having two carbon-carbon double bonds as reactive groups in one molecule is the bifunctional monomer, and one having three or more carbon-carbon double bonds is the multifunctional monomer, which include a bifunctional (meth)acrylate, a trifunctional (meth)acrylate and a multifunctional (meth)acrylate.

Typical examples of such bifunctional monomers and multifunctional monomers include 1,3-butylene glycol di(meth)acrylate, 1,5-pentanediol di(meth)acrylate, 3-methyl-1,5-pentanediol di (meth) acrylate, 1,8-octanediol di(meth) acrylate, 1,9-nonanediol di(meth)acrylate, tricyclodecanedimethanol di (meth) acrylate, polyethylene glycol di(meth) acrylate, propylene glycol di (meth) acrylate, dipropylene glycol di(meth)acrylate, polypropylene glycol di (meth) acrylate, ethylene glycol di (meth) acrylate, diethylene glycol di(meth)acrylate, neopentyl glycol di(meth)acrylate, 1,4-butanediol di (meth) acrylate, 1,6-hexanediol di(meth)acrylate, hydroxypioperinic acid ester neopentyl glycol di(meth)acrylate, trimethylolpropane tri(meth)acrylate, trimethylolpropane EO adduct tri(meth)acrylate, trimethylolpropane PO adduct tri (meth)acrylate, pentaerythritol tri(meth)acrylate, dipentaerythritol hexa(meth)acrylate, dipentaerythritol poly (meth) acrylate, tripropylene glycol di(meth)acrylate, glycerin EO adduct tri(meth)acrylate and the like.

Further, the polymerizable compounds contained in the ultraviolet curing type ink used in the invention may contain another monofunctional monomer other than allyl glycol and N-vinylformamide, as a polymerizable compound. The monofunctional monomer is one having one carbon-carbon double bond as a reactive group in one molecule, which includes a monofunctional (meth)acrylate.

Typical examples of such monofunctional monomers include 2-hydroxyethyl (meth)acrylate, 2-hydroxypropyl (meth)acrylate, 4-hydroxybutyl (meth) acrylate, isobutyl (meth)acrylate, t-butyl (meth) acrylate, isooctyl (meth)acrylate, lauryl (meth)acrylate, stearyl (meth)acrylate, cyclohexyl (meth)acrylate, methoxytriethylene glycol (meth)acrylate, ethylcarbitol (meth)acrylate. 2-phenoxyethyl (meth)acrylate, isobonyl (meth)acrylate, 2-methoxyethyl (meth)acrylate, 3-methoxybutyl (meth)acrylate, 2-ethoxyethyl (meth)acrylate and the like.

The coloring material contained in the ultraviolet curing type ink used in the invention may be either a dye or a pigment. However, a pigment is more advantageous in terms of durability of printed matter.

As the dyes used in the invention, there can be used various dyes which are generally used for ink jet recording, such as a direct dye, an acid dye, a food dye, a basic dye, a reactive dye, a disperse dye, a vat dye, a soluble vat dye and a reactive disperse dye.

As the pigments used in the invention, inorganic pigments and organic pigments can be used without particular limitation.

As the inorganic pigments, there can be used carbon blacks produced by known processes such as a contact process, a furnace process and a thermal process, as well as titanium oxide and iron oxide. Further, as the organic pigments, there can be used azo pigments (including an azo lake, an insoluble azo pigment, a condensed azo pigment, a chelate azo pigment and the like), polycyclic pigments (for example, a phthalocyanine pigment, a perylene pigment, a perynone pigment, an anthraquinone pigment, a quinacridone pigment, a dioxazine pigment, a thioindigo pigment, an isoindolinone pigment, a quinophthalone pigment and the like), dye chelates (for example, a basic dye type chelate, an acid dye type chelate and the like), nitro pigments, nitroso pigments, aniline black and the like. Further, the amount of the coloring material added in the ultraviolet curing type ink composition preferably ranges from about 0.1 to 25% by weight, and more preferably ranges from about 0.5 to 15% by weight.

The photopolymerization initiator contained in the ultraviolet curing type ink used in the invention is, for example, one which absorbs ultraviolet light in a region of about 200 nm to 450 nm or visible light to form radicals or ions, thereby initiating polymerization of the polymerizable compounds.

Typical examples of the photopolymerization initiators used in the invention include benzoin methyl ether, benzoin ethyl ether, isopropyl benzoin ether, isobutyl benzoin ether, 1-phenyl-1,2-propanedione-2-(o-ethoxycarbonyl) oxime, benzyl, diethoxyacetophenone, benzophenone, chlorothioxantone, 2-chlorothioxantone, isopropylthioxantone, 2-methylthioxantone, polychlorinated polyphenyl, hexachlorobenzene and the like, and preferred are isobutyl benzoin ether and 1-phenyl-1,2-propanedione-2-(o-ethoxycarbonyl)oxime.

Further, there can also be used photopolymerization initiators available under the trade names of Vicure 10 and 30 (manufactured by Stauffer Chemical), Irgacure 184, 651, 2959, 907, 369, 1700, 1800, 1850, 819, 127, 379, 754, 500, 1300, 1870, 784, 250 and OXE01, and Darocur 1173, 4265 and TPO (manufactured by Ciba Specialty Chemicals), Quantacure CTX and ITX (manufactured by Aceto Chemical), Lucirin TPO (manufactured by BASF), Kayacure DETX-5 (manufactured by Nippon Kayaku Co., Ltd.) and ESACURE KIP150 (manufactured by Lamberti).

Although a polymerization accelerator contained in the ultraviolet curing type ink used in the invention is not particularly limited, an aminobenzoate derivative is particularly preferred in terms of the problem of odor and more reliable curing of the ultraviolet curing type ink composition. This is because the aminobenzoate derivative reduces polymerization inhibition caused by oxygen.

Typical examples of such aminobenzoate derivatives include ethyl-4-dimethylaminobenzoate, 2-ethylhexyl-4-dimethylaminobenzoate and the like, which are available under the trade names of Darocur EDB and EHA (manufactured by Ciba Specialty Chemicals Corp.) and the like.

Although a surfactant contained in the ultraviolet curing type ink used in the invention is not particularly limited, a silicone-based surfactant or an acetylene-based surfactant is preferred in order to improve wettability of the ink composition to all nonabsorbable material surfaces to improve the prevention of ink repellence.

Typical examples of such silicone-based surfactants include dimethylsiloxane, polyether-modified polydimethylsiloxane, methylstyrene-modified polydimethylsiloxane, olefin-modified polydimethylsiloxane, alcohol-modified polydimethylsiloxane, alkyl-modified polydimethylsiloxane, polyester-modified polydimethylsiloxane, methacryl-modified polydimethylsiloxane and amino-modified polydimethylsiloxane.

Further, there can also be used ones available under the trade names of BYK-307, 331, 333, 347, 348, UV3500, UV3510, UV3530 and UV3570 (manufactured by BYK-Chemie, Japan), and KF-860, 8005, 6004, 351, 353, 354L, 355A, 615A, 618, 6011, 6015, X-22-2426, 164C and 2404 (manufactured by Shin-Etsu Chemical Co., Ltd.).

Typical examples of such acetylene-based surfactants include acetylenediol and acetylene alcohol, and further, there can also be used ones available under the trade names of Olfine E1004 and E1010, and Surfynol 61, 104 and 465 (manufactured by Nissin Chemical Industry Co., Ltd.).

The ultraviolet curing type ink used in the invention may contain an aqueous solvent. Further, as an arbitrary component, there may be added a resin emulsion, an inorganic oxide colloid, a wetting agent, a pH adjuster, a preservative, a mildewproofing agent or the like.

In addition, it is further preferred that the ultraviolet curing type ink used in the invention is an ultraviolet curing type ink of non-solvent type containing no organic solvent.

The ultraviolet curing type ink composition used in the invention is deposited on a substrate, a recording medium or the like by coating or ejection according to an ink jet recording method, and then, irradiated with ultraviolet light.

The ultraviolet dose varies depending on the amount of the ultraviolet curing type ink composition deposited on the substrate, the recording medium or the like and the thickness thereof, and can not be exactly specified. Preferred conditions should be appropriately selected.

For example, however, it ranges from 10 mJ/cm$^2$ to 10,000 mJ/cm$^2$, and preferably ranges from 50 mJ/cm$^2$ to 6,000 mJ/cm$^2$. When the ultraviolet dose is within such a range, the curing reaction can be sufficiently performed.

Further, as the ultraviolet light to be irradiated, it is preferred in terms of safety and environment that ultraviolet light in a long wavelength region of 350 nm of more which generates no ozone is used. Furthermore, it is preferred that the ultraviolet light to be irradiated is not one having a continuous spectrum, but one having a narrow light emission peak width. The wavelength region of this light emission peak is preferably within the range of 350 to 420 nm.

Although means for ultraviolet irradiation are not particularly limited, ultraviolet light emitting semiconductor elements such as ultraviolet LEDs and ultraviolet light emitting semiconductor lasers are preferred in terms of energy consumption, miniaturization and the life of lamps. When the ultraviolet LEDs are used, it is preferred that, for example, an LED having a light emitting peak wavelength of 365 nm, an LED having a light emitting peak wavelength of 380 nm and an LED having a light emitting peak wavelength of 395 nm are combined.

Other means for ultraviolet irradiation include lamps such as a metal halide lamp, a xenon lamp, a carbon arc lamp, a chemical lamp, a low-pressure mercury lamp and a high-pressure mercury lamp. For example, commercially available lamps such as H Lamp, D Lamp and V Lamp manufactured by Fusion System can also be used.

Further, in an ink jet recording method using the ultraviolet curing type ink composition of the invention, heating may be performed before, concurrently with or after ultraviolet light irradiation. Heating includes a method of heating by bringing a heat source into contact with the recording medium, a method of heating without contact with the recording medium, for example, by irradiating an infrared ray or a microwave (an electromagnetic wave having the maximum wavelength at about 2,450 MHz) or by blowing hot air, and the like.

EXAMPLES

The present invention will be illustrated in greater detail with reference to the following Examples, but the invention should not be construed as being limited thereto.

According to ink set composition described in Table 1, ink compositions or ink composition sets of Examples 1 to 12 and Comparative Examples 1 to 12 were prepared.

Table 1

| | Example 1 x) | Example 2 | Example 3 | | Comparative Example 1 | Comparative Example 2 | Comparative Example 3 | |
|---|---|---|---|---|---|---|---|---|
| | | | A | B | | | A | B |
| N-Vinylformamide (manufactured by Arakawa Chemical Industries Ltd.) | | 25 | 24 | 21.9 | | | 24 | 65.9 |
| Allyl glycol (manufactured by Nippon Nyukazai Co., Ltd.) | 62.9 | 32.9 | | 41 | 82.9 | 7.9 | | |
| Tripropylene glycol diacrylate (manufactured by Toagosei Co., Ltd) | 20 | 25 | 70 | | 5 | 50 | 70 | |
| Trimethylolpropane PO adduct triacrylate (manufactured by Osaka Organic Chemical Industry Ltd.) | 8 | 8 | | 33 | 3 | 33 | | 30 |
| Irgacure 1800 (manufactured by Ciba Specialty Chemicals) | 5 | 5 | 5 | | 5 | 5 | 5 | |
| Darocur EHA (manufactured by Ciba Specialty Chemicals) | 1 | 1 | 1 | 1 | 1 | 1 | 1 | 1 |
| Pigment Black-7 | 3 | 3 | | 3 | 3 | 3 | | 3 |
| Dispersing agent (polyoxy-alkylenepolyalkylenepolyamine) | 0.1 | 0.1 | | 0.1 | 0.1 | 0.1 | | 0.1 |
| Polymerization inhibitor (MEHQ ppm) | 500 | 500 | 500 | 500 | 500 | 500 | 500 | 500 |

x) for comparison

EP 1 752 504 B1

Table 1 (continued)

| | Example 4 *x) | Example 5 | Example 6 | | Comparative Example 4 | Comparative Example 5 | Comparative Example 6 | |
|---|---|---|---|---|---|---|---|---|
| | | | A | B | | | A | B |
| N-Vinylformamide (manufactured by Arakawa Chemical Industries Ltd.) | | 25 | 24 | 21.6 | | | 24 | 65.6 |
| Allyl glycol (manufactured by Nippon Nyukazai Co., Ltd.) | 62.6 | 32.6 | | 41 | 82.6 | 7.6 | | |
| Tripropylene glycol diacrylate (manufactured by Toagosei Co., Ltd) | 20 | 25 | 70 | | 5 | 50 | 70 | |
| Trimethylolpropane PO adduct triacrylate (manufactured by Osaka Organic Chemical Industry Ltd.) | 8 | 8 | | 33 | 3 | 33 | | 30 |
| Irgacure 1800 (manufactured by Ciba Specialty Chemicals) | 5 | 5 | 5 | | 5 | 5 | 5 | |
| Darocur EHA (manufactured by Ciba Specialty Chemicals) | 1 | 1 | 1 | 1 | 1 | 1 | 1 | 1 |
| Pigment Blue-15:3 | 3 | 3 | | 3 | 3 | 3 | | 3 |
| Dispersing agent (polyoxy-alkylenepolyalkylenepolyamine) | 0.4 | 0.4 | | 0.4 | 0.4 | 0.4 | | 0.4 |
| Polymerization inhibitor (MEHQ ppm) | 500 | 500 | 500 | 500 | 500 | 500 | 500 | 500 |

x) for comparison

Table 1 (continued)

| | Example 7 x) | Example 8 | Example 9 | | Comparative Example 7 | Comparative Example 8 | Comparative Example 9 | |
|---|---|---|---|---|---|---|---|---|
| | | | A | B | | | A | B |
| N-Vinylformamide (manufactured by Arakawa Chemical Industries Ltd.) | | 25 | 24 | 21.8 | | | 24 | 65.8 |
| Allyl glycol (manufactured by Nippon Nyukazai Co., Ltd.) | 62.8 | 32.8 | | 41 | 82.8 | 7.8 | | |
| Tripropylene glycol diacrylate (manufactured by Toagosei Co., Ltd) | 20 | 25 | 70 | | 5 | 50 | 70 | |
| Trimethylolpropane PO adduct triacrylate (manufactured by Osaka Organic Chemical Industry Ltd.) | 8 | 8 | | 33 | 3 | 33 | | 30 |
| Irgacure 1800 (manufactured by Ciba Specialty Chemicals) | 5 | 5 | 5 | | 5 | 5 | 5 | |
| Darocur EHA (manufactured by Ciba Specialty Chemicals) | 1 | 1 | 1 | 1 | 1 | 1 | 1 | 1 |
| Pigment Violet-19 | 3 | 3 | | 3 | 3 | 3 | | 3 |
| Dispersing agent (polyoxy-alkylenepolyalkylenepolyamine) | 0.2 | 0.2 | | 0.2 | 0.2 | 0.2 | | 0.2 |
| Polymerization inhibitor (MEHQ ppm) | 500 | 500 | 500 | 500 | 500 | 500 | 500 | 500 |

x) for comparison

Table 1 (continued)

| | Example 10 x) | Example 11 | Example 12 | | Comparative Example 10 | Comparative Example 11 | Comparative Example 12 | |
|---|---|---|---|---|---|---|---|---|
| | | | A | B | | | A | B |
| N-Vinylformamide (manufactured by Arakawa Chemical Industries Ltd.) | | 25 | 24 | 21.8 | | | 24 | 65.8 |
| Allyl glycol (manufactured by Nippon Nyukazai Co., Ltd.) | 62.8 | 32.8 | | 41 | 82.8 | 7.8 | | |
| Tripropylene glycol diacrylate (manufactured by Toagosei Co., Ltd) | 20 | 25 | 70 | | 5 | 50 | 70 | |
| Trimethylolpropane PO adduct triacrylate (manufactured by Osaka Organic Chemical Industry Ltd.) | 8 | 8 | | 33 | 3 | 33 | | 30 |
| Irgacure 1800 (manufactured by Ciba Specialty Chemicals) | 5 | 5 | 5 | | 5 | 5 | 5 | |
| Darocur EHA (manufactured by Ciba Specialty Chemicals) | 1 | 1 | 1 | 1 | 1 | 1 | 1 | 1 |
| Pigment Yellow-155 | 3 | 3 | | 3 | 3 | 3 | | 3 |
| Dispersing agent (polyoxy-alkylenepolyalkylenepolyamine) | 0.2 | 0.2 | | 0.2 | 0.2 | 0.2 | | 0.2 |
| Polymerization inhibitor (MEHQ ppm) | 500 | 500 | 500 | 500 | 500 | 500 | 500 | 500 |

x) for comparison

Storage Stability Test

The above-mentioned ultraviolet curing type ink compositions were each allowed to stand under the environment of 60°C for 7 days, and the initial viscosity (mPa·s) and the viscosity after standing were measured with a rheometer (MCR-300 manufactured by Physica) to evaluate the rate of change in viscosity. Numerical values of the initial viscosity are shown in Table 2, and the results of storage stability evaluation are shown in Table 3. Evaluation Indexes:

AA: The rate of change between the initial viscosity and the viscosity after standing is less than ±25%
A: The rate of change between the initial viscosity and the viscosity after standing is from ±25% to less than ±50%.
B: The rate of change between the initial viscosity and the viscosity after standing is from ±50% to less than ±100%.
C: The rate of change between the initial viscosity and the viscosity after standing is 100% or more.

Table 2

| Example 1 *) | Example 2 | Example 3 | | Comparative Example 1 | Comparative Example 2 | Comparative Example 3 | |
|---|---|---|---|---|---|---|---|
| | | A | B | | | A | B |
| 7.2 | 8.7 | 14 | 6.9 | 4.2 | 25.2 | 14 | 9.5 |
| Example 4 *) | Example 5 | Example 6 | | Comparative Example 4 | Comparative Example 5 | Comparative Example 6 | |
| | | A | B | | | A | B |
| 6.8 | 8.3 | 14 | 6.5 | 3.8 | 24.8 | 14 | 9.1 |
| Example 7 *) | Example 8 | Example 9 | | Comparative Example 7 | Comparative Example 8 | Comparative Example 9 | |
| | | A | B | | | A | B |
| 6.5 | 8 | 14 | 6.2 | 3.5 | 24.5 | 14 | 8.8 |
| Example 10*) | Example 11 | Example 12 | | Comparative Example 10 | Comparative Example 11 | Comparative Example 12 | |
| | | A | B | | | A | B |
| 7.2 | 8.7 | 14 | 6.9 | 4.2 | 25.2 | 14 | 9.5 |
| *) for comparison | | | | | | | |

Table

| Example 1 *) | Example 2 | Example 3 | | Comparative Example 1 | Comparative Example 2 | Comparative Example 3 | |
|---|---|---|---|---|---|---|---|
| | | A | B | | | A | B |
| AA | AA | AA | AA | B | C | AA | B |
| Example 4 *) | Example 5 | Example 6 | | Comparative Example 4 | Comparative Example 5 | Comparative Example 6 | |
| | | A | B | | | A | B |
| AA | AA | A | AA | B | C | A | B |
| Example 7 *) | Example 8 | Example 9 | | Comparative Example 7 | Comparative Example 8 | Comparative Example 9 | |
| | | A | B | | | A | B |
| A | A | A | AA | B | C | A | C |

(continued)

| Example 10 *) | Example 11 | Example 12 | | Comparative Example 10 | Comparative Example 11 | Comparative Example 12 | |
|---|---|---|---|---|---|---|---|
| | | A | B | | | A | B |
| A | A | A | A | B | C | A | C |
| *) for comparison | | | | | | | |

Curability Test

Utilizing a PX-G900 ink jet printer (manufactured by Seiko Epson Corporation and using the above-mentioned ultraviolet curing type ink compositions, solid pattern printing was performed on a PC sheet (manufactured by Teijin Chemicals Co., Ltd., Panlite Sheet) at ordinary temperature and ordinary pressure, and printing and curing treatment were performed at the same time by means of an ultraviolet irradiation equipment of ultraviolet light having a wavelength of 365 nm and an irradiation intensity of 17 mW/cm$^2$ which was installed at a delivery port, under such curing conditions as to give an integrated light amount of 120 mJ/cm$^2$ for an irradiation time of 6 seconds. Then, the following visual evaluation of the surface state was performed. Further, in Examples 3, 6, 9, 12 and Comparative Examples 3, 6, 9 and 12, ink composition A and ink composition B are each concurrently ejected to bring them into contact with each other on the above-mentioned PC sheet, and then, curing treatment was performed under the above-mentioned conditions. The results of curability evaluation are shown in Table 4.
Evaluation Indexes:

AA: Completely cured without causing a scratch by rubbing with a nail.
A: A surface gets scratched by rubbing with a nail, but is on a practical level.
B: Only a surface is cured, and an inside is in liquid form.
C: Slightly cured, but wholly in liquid form.
D: Unprintable.

Table 4

| Example 1*) | Example 2 | Example 3 | | Comparative Example 1 | Comparative Example 2 | Comparative Example 3 | |
|---|---|---|---|---|---|---|---|
| | | A | B | | | A | B |
| A | A | A | | C | D | B | |
| Example 4*) | Example 5 | Example 6 | | Comparative Example 4 | Comparative Example 5 | Comparative Example 6 | |
| | | A | B | | | A | B |
| A | A | AA | | C | D | B | |
| Example 7 *) | Example 8 | Example 9 | | Comparative Example 7 | Comparative Example 8 | Comparative Example 9 | |
| | | A | B | | | A | B |
| A | AA | AA | | C | D | B | |
| Example 10*) | Example 11 | Example 12 | | Comparative Example 10 | Comparative Example 11 | Comparative Example 12 | |
| | | A | B | | | A | B |

(continued)

| Example 10*) | Example 11 | Example 12 | Comparative Example 10 | Comparative Example 11 | Comparative Example 12 |
|---|---|---|---|---|---|
| A | AA | AA | C | D | B |
| *) for comparison | | | | | |

With respect to the ultraviolet curing type inks of Examples which contained allyl glycol and N-vinylformamide in specific amounts, ink compositions excellent in storage stability and curability were obtained.

While the present invention has been described in detail and with reference to specific embodiments thereof, it will be apparent to one skilled in the art that various changes and modifications can be made therein without departing from the spirit and scope thereof.

**Claims**

1. An ink composition comprising at least, as the polymerizable compounds, allyl glycol and at least one of a bifunctional monomer and a multifunctional monomer, and satisfying the following expression:

$$20 \leq X \leq 70$$

wherein X represents the content of allyl glycol in the ink composition, further comprising N-vinylformamide as a polymerizable compound, and satisfying the following expression:

$$0 < Y \leq 35$$

wherein Y represents the content of N-vinylformamide in the ink composition.

2. The ink composition according to claim 1, wherein Y satisfies the following expression:

$$0 < Y \leq 25.$$

3. An ink composition set comprising:

ink composition A containing at least a polymerizable compound and a photopolymerization initiator; and
ink composition B containing at least a polymerizable compound and a coloring material, wherein the ink composition B comprises at least, as the polymerizable compounds, allyl glycol and at least one of a bifunctional monomer and a multifunctional monomer, and satisfies the following expression:

$$20 \leq X \leq 70$$

wherein X represents the content of allyl glycol in the ink composition,
wherein the ink composition B further comprises N-vinylformamide as the polymerizable compound, and satisfies the following expressions:

$$0 < Y \leq 35$$

wherein Y represents the content of N-vinylformamide in the ink composition.

4. The ink composition set according to claim 3, wherein Y satisfies the following expression:

$$0 < Y \leq 25.$$

**Patentansprüche**

1. Tintenzusammensetzung, umfassend wenigstens als polymerisierbare Verbindungen Allylglycol und wenigstens ein Glied aus der Gruppe eines bifunktionellen Monomers und eines multifunktionellen Monomers, wobei der folgende Ausdruck erfüllt ist:

$$20 \leq X \leq 70$$

worin X den Gehalt an Allylglycol in der Tintenzusammensetzung wiedergibt, weiter umfassend N-Vinylformamid als polymerisierbare Verbindung, wobei der folgende Ausdruck erfüllt ist:

$$0 < Y \leq 35$$

worin Y den Gehalt an N-Vinylformamid in der Tintenzusammensetzung wiedergibt.

2. Tintenzusammensetzung gemäß Anspruch 1, worin Y den folgenden Ausdruck erfüllt:

$$0 < Y \leq 25.$$

3. Tintenzusammensetzungsset, umfassend:

eine Tintenzusammensetzung A, die wenigstens eine polymerisierbare Verbindung und einen Fotopolymerisationsinitiator enthält, und
eine Tintenzusammensetzung B, die wenigstens eine polymerisierbare Verbindung und ein färbendes Material enthält, worin die Tintenzusammensetzung B wenigstens als polymerisierbare Verbindungen Allylglycol und wenigstens ein Glied aus der Gruppe eines bifunktionellen Monomers und eines multifunktionellen Monomers umfasst und den folgenden Ausdruck erfüllt:

$$20 \leq X \leq 70$$

worin X den Gehalt an Allylglycol in der Tintenzusammensetzung wiedergibt, worin die Tintenzusammensetzung B weiter N-Vinylformamid als polymerisierbare Verbindung umfasst und den folgenden Ausdruck erfüllt:

$$0 < Y \leq 35$$

worin Y den Gehalt an N-Vinylformamid in der Tintenzusammensetzung wiedergibt.

4. Tintenzusammensetzungsset gemäß Anspruch 3, worin Y den folgenden Ausdruck erfüllt:

$$0 < Y \leq 25.$$

**Revendications**

1. Composition d'encre comprenant au moins, en tant que composés polymérisables, de l'allyl glycol et au moins l'un d'un monomère bifonctionnel et d'un monomère multifonctionnel et satisfaisant l'expression suivante :

$$20 \leq X \leq 70$$

où X représente la teneur en allyl glycol dans la composition d'encre, comprenant en outre du N-vinylformamide en tant que composé polymérisable et satisfaisant l'expression suivante :

$$0 < Y \leq 35$$

où Y représente la teneur en N-vinylformamide dans la composition d'encre.

2. Composition d'encre selon la revendication 1, dans laquelle Y satisfait l'expression suivante :

$$0 < Y \leq 25.$$

3. Ensemble de compositions d'encre comprenant :

une composition d'encre A contenant au moins un composé polymérisable et un initiateur de photopolymérisation ; et
une composition d'encre B contenant au moins un composé polymérisable et une matière colorante, dans lequel la composition d'encre B comprend au moins, en tant que composés polymérisables, de l'allyl glycol et au moins l'un d'un monomère bifonctionnel et d'un monomère multifonctionnel et satisfait l'expression suivante :

$$20 \leq X \leq 70$$

où X représente la teneur en allyl glycol dans la composition d'encre,
dans lequel la composition d'encre B comprend en outre du N-vinylformamide en tant que composé polymérisable et satisfait l'expression suivante :

$$0 < Y \leq 35$$

où Y représente la teneur en N-vinylformamide dans la composition d'encre.

4. Ensemble de compositions d'encre selon la revendication 3, dans lequel Y satisfait l'expression suivante :

$$0 < Y \leq 25.$$

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3216379 A
- US 5623001 A
- JP 2003301130 A
- JP 2004018716 A